# EUROPÄISCHE PATENTSCHRIFT

(11) **EP 1 014 032 B1**
(45) Veröffentlichungstag und Bekanntmachung des Hinweises auf die Patenterteilung: **17.03.2004**
(21) Anmeldenummer: 99125670.2
(22) Anmeldetag: 22.12.1999
(51) Int. Cl.: G01B 7/02, B66B 1/32, B66B 1/34

(54) **Messseil-Wegsensor**
Measuringline displacement sensor
Capteur de déplacement à cable

(30) Priorität: 22.12.1998 DE 19859444
(43) Veröffentlichungstag der Anmeldung: 28.06.2000
(73) Patentinhaber: ASM Automation Sensorik Messtechnik GmbH, 85452 Moosinning (DE)
(72) Erfinder: Steinich, Klaus-Manfred, 85604 Poering (DE)
(74) Vertreter: Alber, Norbert, Dipl.-Ing.

(56) Entgegenhaltungen:
- EP-A- 0 778 239
- DE-C- 729 362
- GB-A- 2 005 843
- JP-A- 5 270 735
- US-A- 4 520 906

## Beschreibung

Die Erfindung betrifft einen Meßseil-Wegsensor mit Bremseinrichtung.

Meßseil-Wegsensoren sind in vielfacher Ausformung bekannt, um die exakte Positionierung eines bestimmten Bauteiles, welches sich insbesondere über große Weglängen bewegen kann, zu bestimmen, beispielsweise der Kabine eines Aufzuges. Ein derartiger Meßseil-Wegsensor weist ein Zugelement, etwa ein Meßseil, auf, welches auf einer in die Aufwickelrichtung vorgespannten Seiltrommel aufgewickelt ist und dessen freies Ende mit demjenigen Gegenstand verbunden ist, dessen Position bestimmt werden soll, beispielsweise der Aufzugskabine. Die Vorspannung der Seiltrommel erfolgt beispielsweise über eine Flachspiralfeder, die beispielsweise koaxial zur Seiltrommel angeordnet und mit dieser drehfest verbunden ist.

Die Seiltrommel ist ferner mit einer Bestimmungseinheit gekoppelt, die die Umdrehungen bzw. Winkelelemente registriert, welche die Seiltrommel in Aufwickelrichtung bzw. Abwickelrichtung durchläuft und daraus über eine Auswerteelektronik die abgezogene Länge des Zugelementes bestimmt.

Zur Vereinfachung dieser Bestimmung ist das Zugelement, beispielsweise das Seil, in nur einer einzigen Lage auf dem Umfang der Seiltrommel axial nebeneinander aufgewickelt, da hierdurch eine Umdrehung der Seiltrommel immer der exakt gleichen Länge des Zugelementes entspricht.

Um die Bewicklung in nur einer Lage und das Überspringen des Zugelementes beim Bewickeln der Wickeltrommel in eine zweite Lage zu verhindern, müssen mechanische Vorkehrungen konstruktiver Art an dem Wegsensor getroffen werden.

Dabei kommt erschwerend hinzu, daß diese Meßseil-Wegsensoren oft in einer nachteiligen Umgebung, mit z. B. hoher Verschmutzung, eingesetzt werden müssen. Deshalb muß der Meßseil-Wegsensor in einem dichten Gehäuse untergebracht werden, und auch das aus dem Gehäuse herausgeführte Meßseil muß über eine möglichst dichte Seildurchführung aus dem Gehäuse herausgeführt sein.

Um ein sauberes einlagiges Aufwickeln des Meßseiles auf der Seiltrommel zu gewährleisten, besteht eine Möglichkeit darin, die Seiltrommel in axialer Richtung sehr kurz auszubilden. Wenn zusätzlich der Seileinlauf ausreichende Entfernung von dem Punkt der Seiltrommel besitzt, auf den das Seil tangential aufläuft, läuft das Meßseil vom Seileinlauf zur Seiltrommel nur unter einer so geringen Winkelauslenkung, die noch vertretbar ist, und automatisch eine Bewicklung der in Aufwickelrichtung vorgespannten Seiltrommel in nur einer Lage bewirkt.

Die EP 0 778 239 A1 zeigt dagegen eine Wickeltrommel, die relativ zum Seileinlauf in Achsialrichtung zusätzlich verschoben wird, um eine gleichmäßige Bewicklung in nur einer Lage sicherzustellen.

Bei derartigen Meßseil-Wegsensoren treten zwei unterschiedliche, von ihrer Ursache her jedoch gekoppelte, Schwierigkeiten auf:

Um die Meßgenauigkeit sicherzustellen, muß das Meßseil in jedem Zustand der Auf- oder Abwicklung mit einer vorgegebenen Mindestkraft vorgespannt sein, und dementsprechend muß eine entsprechend starke Federvorspannung in Aufwickelrichtung die Seiltrommel vorspannen.

Die relativ starke Federvorspannung der Seiltrommel dient unter anderem dazu, daß auch bei sehr schneller Bewegung des freien Seilendes und des damit verbundenen Meßobjektes auf die Seiltrommel zu jederzeit ein sauberes Bewickeln der Seiltrommel aufgrund ausreichend hoher Vorspannung in Aufwickelrichtung unabhängig von der Wickelgeschwindigkeit gegeben ist.

Dennoch kann es - bei sehr schnellem Aufwickeln - unter Umständen vorkommen, daß das Meßseil "aufsteigt", also in Abstand zum Außenumfang des Wickelzylinders gerät und beispielsweise das unerwünschte, da die Messung grob verfälschende, Überspringen in eine zweite Wicklungsebene geschieht.

Es ist bereits versucht worden, durch mechanische Leit- und Führvorrichtungen, Streifer etc. ein derartiges "Aufsteigen" des Meßseiles zu verhindern, was jedoch wegen der mechanischen Reibung zu unerwünschten Nebeneffekten wie Verschließ, Erhöhung der Wicklungskraft etc. führt.

Ein anderer nachteiliger Effekt der starken Vorspannung der Seiltrommel besteht darin, daß für den Fall, daß sich das freie Seilende schneller auf die Seiltrommel zubewegt, als diese aufwickeln kann oder falls das freie Seilende entkoppelt von dem Meßobjekt, und damit völlig ohne Bremskraft sich auf den Seileinlauf zubewegt. Dadurch dreht die federvorgespannte Seiltrommel bis zu sehr hohen Drehzahlen hoch, und am Ende der Aufwicklung schlägt das verdickte und mit einer Befestigungsvorrichtung mittels einer Öse ausgestattete freie Seilende mit sehr hoher Geschwindigkeit auf den - demgegenüber kleineren - Seileinlauf auf, was zu einer Beschädigung oder gar zu einem Riss des Meßseiles oder der Verbindung zwischen Meßseil und der Befestigungsvorrichtung an dessen freiem Seilende etc. führen kann.

Aus der JP 05270735 A ist bekannt, eine Magnetbremse an einer Wickelvorrichtung für elektrischen Draht vorzusehen.

Die Aufgabe der vorliegenden Erfindung ist es, trotz ausreichend starker Vorspannung der Seiltrommel in die Aufwickelrichtung ein zu starkes Beschleunigen der Seiltrommel beim Aufwickeln zu vermeiden.

Diese Aufgabe wird durch die Merkmale der Ansprüche 1 und 3 gelöst. Vorteilhafte Ausführungsformen ergeben sich aus den Unteransprüchen.

Eine Unteraufgabe der Erfindung besteht darin, das Aufsteigen des Meßseiles zu verhindern.

In beiden Fällen sollen die Hauptfunktionen des Meßseil-Wegsensors nicht negativ beeinflußt werden und insbesondere auch nicht die Lebensdauer des Meßseil-Wegsensors.

Eine Begrenzung der Drehgeschwindigkeit beim Aufwickeln der Seiltrommel wird erreicht, indem eine berührungslose, magnetische Bremse verwendet wird. Die dabei beteiligten Bauteile müssen aus einem elektrisch leitenden Material bestehen.

Das Bremsmoment wird erzeugt zwischen einem exzentrisch liegenden Bereich der Seiltrommel, vorzugsweise einen Bereich nahe deren Außenumfang, und einem demgegenüber liegenden ortsfesten Punkt, beispielsweise des Gehäuses der Meßseiltrommel.

Da auf der radial außenliegenden Mantelfläche die Bewicklung mittels Meßseil erfolgt, erfolgt die Ausrichtung der Magnete vorzugsweise in Längsrichtung, also parallel zur Rotationsachse der Seiltrommel, zwischen zwei in dieser Axialrichtung benachbarten Bauteile.

Dabei wird aufgrund der Drehung der Seiltrommel unabhängig vom Abstand des Bremsmagneten gegenüber dem zu beeinflussenden Bauteil zunächst ein Wirbelstrom in dem Bauteil erzeugt, welcher den Bremsmagneten trägt. Dieser Wirbelstrom hat ein Magnetfeld zur Folge, das sich über den nicht im Magnetfeld befindlichen Teil schließt und ein Bremsmoment bewirkt.

Die Bremswirkung wird - neben der Stärke des verwendeten Magneten - sehr stark von dem Abstand zwischen Magnet und zu beeinflussendem Bauteil bestimmt, weshalb dieser Abstand vorzugsweise einstellbar sein soll.

Das jeweils vom Bremsmagnet zu beeinflussende Bauteil muß aus elektrisch leitfähigem Material, beispielsweise Aluminium, bestehen. Bei Anordnung der Magnete an der Seiltrommel erhöht sich deren träge Masse, weshalb zunächst der Gedanke naheliegt, den bzw. die Bremsmagneten an einem ortsfesten Punkt z. B. des Gehäuses anzuordnen. Dies würde auch den Zwang einer paarweisen, nicht unwuchtigen, Anordnung der Bremsmagnete beheben, und es würden auch mehr Raum, z. B. für den Einsatz eines Magnethalters für die Einstellbarkeit Luftspaltes, zur Verfügung stehen.

Für die Anordnung der Bremsmagnete an der Seiltrommel spricht jedoch die Möglichkeit, diese Bremsmagnete gleichzeitig und damit funktionsvereinigt als Haltemagnete zu nutzen.

Unter Haltemagneten sollen hier Magnete verstanden werden, die das radiale "Aufsteigen" des Meßseiles von der Wickelfläche, der Außenfläche des Wickelzylinders, vermeiden sollen, indem das (für diesen Zweck notwendigerweise magnetisierbare) Material des Meßseiles durch Magnetkraft radial nach innen gegen die Wickelfläche gezogen wird. Derartige Haltemagnete müssen dementsprechend radial innerhalb der Wickelfläche an der Seiltrommel eingesetzt werden, vorzugsweise also auf der Innenseite des aus dünnem Material bestehenden Wickelzylinders befestigt werden, vorzugsweise wiederum über den Umfang der Seiltrommel verteilt. Auch hier empfiehlt sich die Ausrichtung der Magnetisierungsachse des Magneten parallel zur Rotationsachse der Seiltrommel, also z. B. die Anordnung eines Stabmagneten, insbesondere eines Permanentmagneten, in Längsrichtung liegend.

Die Magnetkraft kann in beiden Fällen bekanntermaßen durch die Anordnung von sogenannten Polschuhen, also die dichte Anlage von Eisenwerkstoffen auf wenigstens einer Außenseite des Magneten, erhöht werden, um die Magnetverluste zu reduzieren. In derjenigen Richtung, in welcher der freie Ein- bzw. Austritt der Feldlinien in den Magneten benötigt wird, darf vorzugsweise keine Abdeckung durch einen Polschuh erfolgen. Es werden deshalb hauptsächlich topfförmige Polschuhe bevorzugt, die beim Bremsmagneten mit ihrer offenen Seite gegen das zu beeinflussende Bauteil und beim Haltemagneten mit der offenen Seite radial nach außen gegen das Meßseil gerichtet sind.

Zusätzlich ist eine Erhöhung der Bremskraft möglich, indem sogenannte Seltenerd-Magnete, also Magnete mit Bestandteilen aus Somarium, Kobalt, Neodym, und/oder Bor verwendet werden. Insbesondere sind mit derartigen Seltenerd-Magneten scheibenförmige Magnete realisierbar, deren Magnetisierungsachse parallel zur Dicke der Scheibe durch die Scheibe hindurch verläuft und/oder die dabei sektorartig unterschiedlich magnetisiert sein können.

Derartige scheibenförmige Magnete können in den beengten Platzverhältnissen der Meßseil-Wegsensoren einfacher untergebracht werden als längliche Stabmagnete.

Insbesondere ist die Aufnahme dieser scheibenförmigen Magnete in der Stirnseite von Gewindebolzen als Magnethalter möglich, die dann in den tragenden Bauteil durch Verschraubung an das zu beeinflussende Bauteil näher herangeführt oder von diesem weiter abgerückt werden können zur Einstellbarkeit der gewünschten Wirkung.

Alternativ und/oder ergänzend zu den Haltemagneten kann auch über den Außenumfang der beweglichen Seiltrommel ein Gleitband, insbesondere ein Textil-Band oder ein Filzband oder insbesondere aus Kunststoff wie PE, POM, PTFE bestehend, gelegt werden, welches bei korrekter Bewicklung der Seiltrommel keinen Kontakt zu der Meßseilwicklung hat, bzw. kraftlos an diesem anliegt, jedoch bei Aufsteigen des Meßseiles eine Kraft auf des aufsteigende Meßseil bewirkt.

Eine Ausführungsform gemäß der Erfindung ist im folgenden anhand der Figuren beispielhaft näher beschrieben.

Es zeigen:
- Fig. 1:: die Bremsmagnete im Gehäuse,
- Fig. 2:: die Bremsmagnete in der Seiltrommel,
- Fig. 3:: eine Frontansicht der Seiltrommel der Fig. 2,
- Fig. 4:: Detaildarstellungen der Bremsmagnete,
- Fig. 5:: unterschiedlich magnetisierte Magnete,
- Fig. 6:: einen Schnitt durch eine weitere Ausführungsform eines Meßseil-Wegsensors,
- Fig. 7:: eine Ansicht der Seiltrommel aus Fig. 6 und
- Fig. 8:: weitere Bauformen des Meßseilwegsensors.

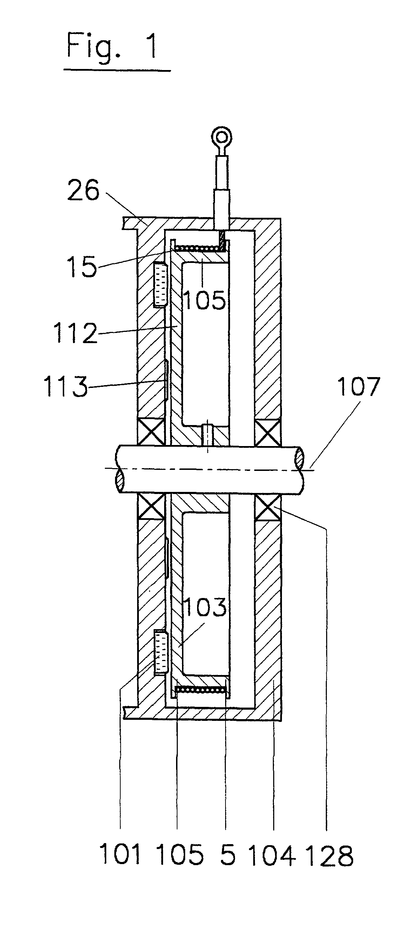

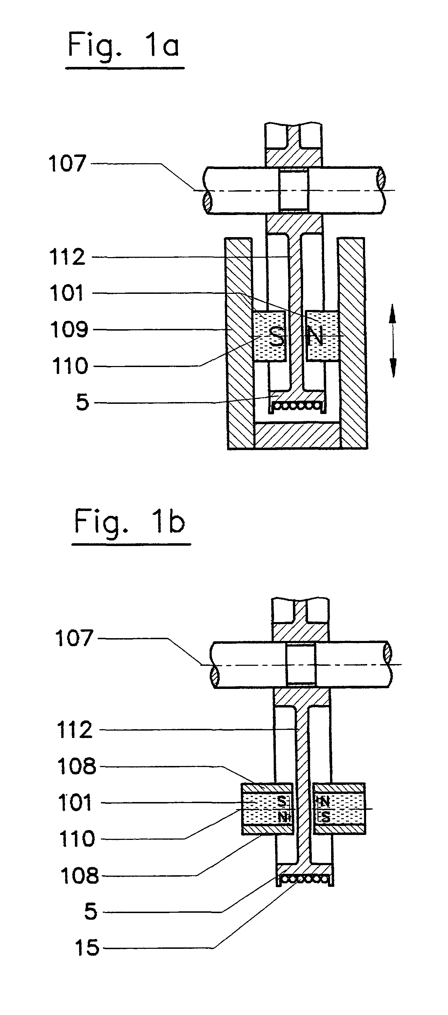

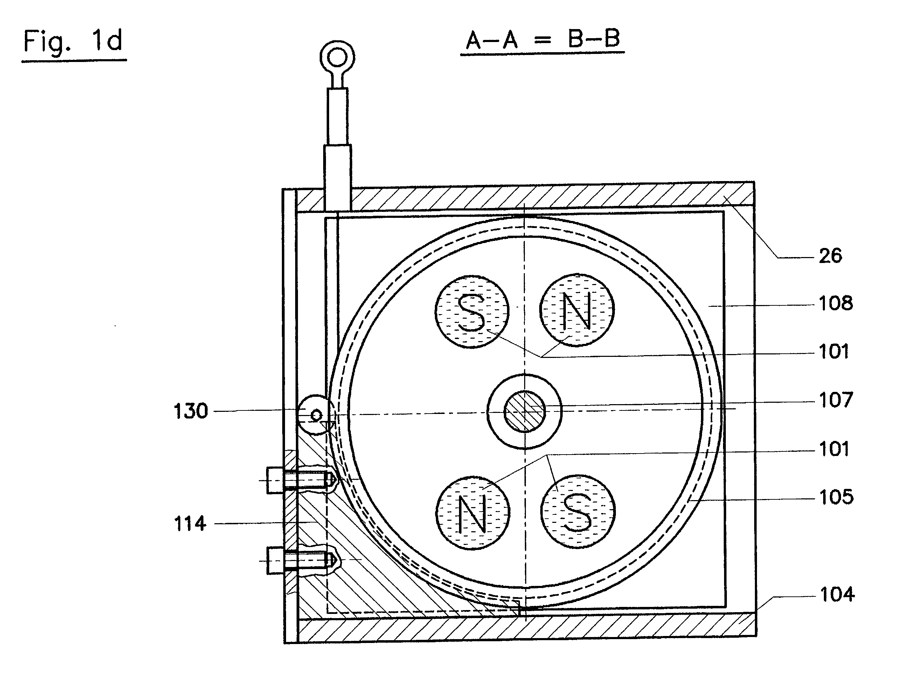

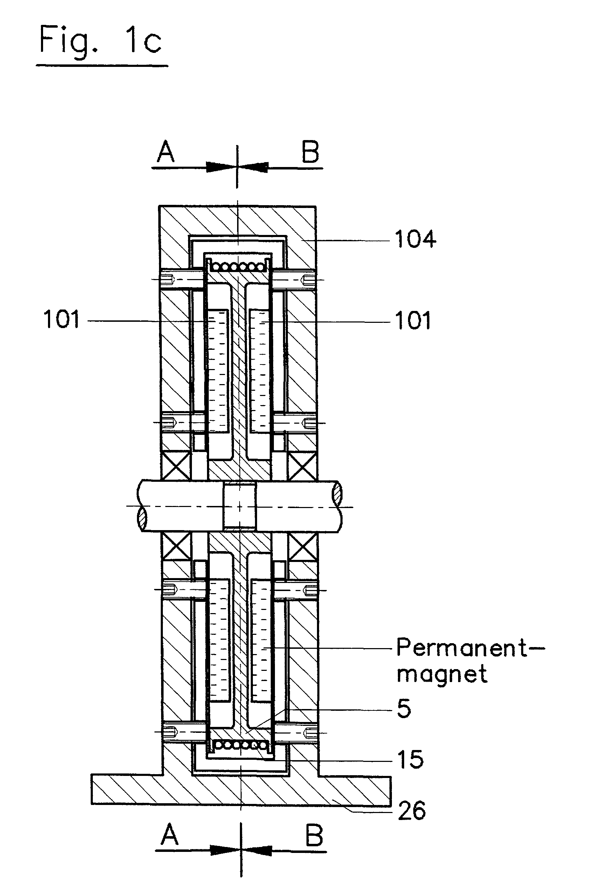

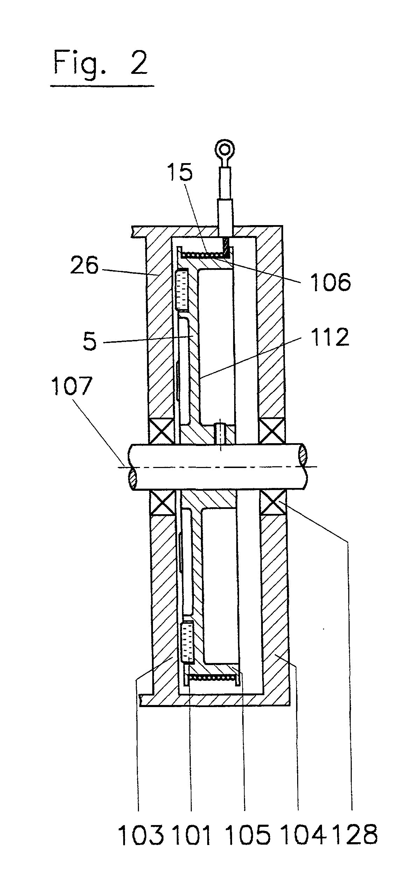

Die Fig. 1 und 2 zeigen jeweils die Seiltrommel 5, die auf einer Welle befestigt ist und damit um ihre Rotationsachse 107 rotieren kann. Zu diesem Zweck ist die Welle mittels Lagern 128 im Gehäuse gelagert, welches aus einem kastenförmigen, vorzugsweise geschlossenen, Profil 26 besteht.

Die Seiltrommel 5 besteht aus einem Wickelzylinder 105, der radial nach außen weisende, begrenzende Anschläge an beiden Stirnseiten für das auf der Wickelfläche 106, dem Außenumfang des Wickelzylinders 105, aufzuwickelnde Meßseil 15 aufweist. Der Wickelzylinder 105 geht einstufig über einzelne Speichen oder eine Speichenplatte in den Nabenbereich der Wickeltrommel über.

Während in Fig. 1 die Speichen bzw. Trommelplatte 112 mit dem einen axialen Ende des Wickelzylinders 105 und damit der Seiltrommel 5 zusammenfällt und damit nahe an der linken Wand des Gehäuses des Profiles 26 liegt, ist diese Trommelplatte 112 bei der Lösung gem. Fig. 2 vom äußeren axialen Rand etwas zurückversetzt.

Entsprechend sind in Fig. 1 der mindestens eine Bremsmagnet 101 in derjenigen Wand des Profiles 26 angeordnet, die der Trommelplatte 112 in geringem axialem Abstand gegenübersteht, so daß nur ein geringer Luftspalt zwischen den Bremsmagneten 101 und der Trommelplatte 112 besteht.

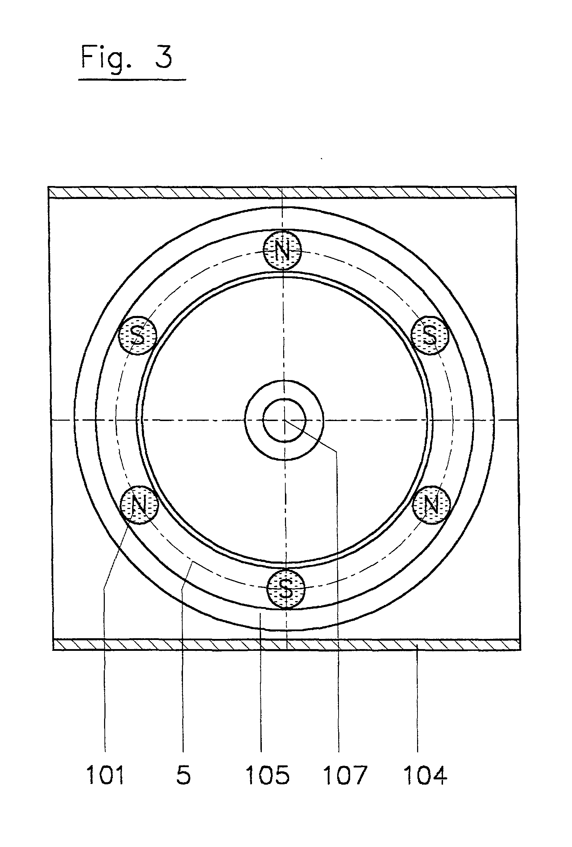

Der bzw. die Bremsmagnete 101 sind im radial äußeren Bereich der Seiltrommel 5, nahe an oder im Bereich deren Wickelzylinder 105, angeordnet, und zwar über den Umfang verteilt, wie Fig. 3 zeigt.

Eine Erhebung an dieser Wand des Gehäuses 104 dient als Kontaktschutz 113, also zur Verhinderung des Anhaftens der Seiltrommel 5 an den Bremsmagneten 101 in axialer Richtung.

Wie die Detaildarstellung der Fig. 1 a zeigt, können - vor allem bei in axialer Richtung mittig stehender Trommelplatte 112 - die Bremsmagnete 101 von beiden Seiten aus in axialer Richtung fluchtend gegen diese Trommelplatte 112 gerichtet sein. Die beiden Bremsmagnete 101, die mit unterschiedlichen Polen gegen die Trommelplatte 112 gerichtet sind, können auf den Innenseiten eines U-förmigen Magnethalters 109 befestigt sein, welcher das radial äußere Ende der Seiltrommel 5 umgreift, und dabei insbesondere auch in radialer Richtung verlagerbar ist zur Veränderung der Bremskraft.

Die Detaillösung gemäß Fig. 1b zeigt ebenfalls von beiden axialen Richtungen gegen die Trommelplatte 112 gerichtete Bremsmagnete 101, die jedoch - im Gegensatz zu den Bremsmagneten 101 in Fig. 1a - eine Magnetisierungsachse 110 parallel zur Trommelplatte 112, nämlich in Radialrichtung der Trommelplatte, aufweisen, und jeweils außen von plattenförmigen Polschuhen 108 umgeben sind.

Die Darstellungen der Figuren 1c und 1d zeigen dagegen eine Lösung, bei der sich vier Paare von Bremsmagneten 101, die jeweils beidseits der Trommelplatte 112 der Seiltrommel 5 angeordnet sind, und zwar jeweils ein Paar in jedem Quadranten bezüglich der Achse 107 der Seiltrommel 5. Dabei sind die Bremsmagnete 101 jeweils im Inneren eines oder mehrerer die Seiltrommel 5 radial außen umgreifender Polschuhe 108 angeordnet, die der Flußverstärkung dienen und insbesondere aus Weicheisen bestehen. Der Polschuh 108 besteht dabei vorzugsweise aus einem geschlossenen Kastenprofil mit einer Durchgangsbohrung quer zu seiner Ebene in der Mitte zum Hindurchschieben der Welle der Seiltrommel 5.

Mit Hilfe von Einstellschrauben ist der Polschuh in axialer Richtung am umgebenden Gehäuse 104 fixierbar und in axialer Richtung relativ zur Seiltrommel 5 einstellbar.

Wie Fig. 1d zeigt, drückt eine Gleitrolle 130 am Auftreffpunkt des Meßseiles auf der Seiltrommel 5 das Meßseil gegen die Trommelaußenfläche, und im weiteren Verlauf, insbesondere im nachfolgenden Quadranten, wird ein Abheben des Meßseiles 15 von der Seiltrommel mittels eines an der Außenkontur gegen die Außenseite des aufgewickelten Meßseiles anliegenden Gleitschuhes 114 verhindert.

Im Gegensatz dazu sind bei der Lösung gem. Fig. 2 die Bremsmagnete 101 in der Trommelplatte 112 unmittelbar radial innerhalb des Wickelzylinders 105 der Seiltrommel 105 angeordnet, und weisen gegen die in geringem Abstand gegenüberliegende Wand des Profiles 26. Auch hier ist durch eine Erhöhung ein Kontaktschutz 113 ausgebildet, dieses Mal jedoch an der Seiltrommel 5.

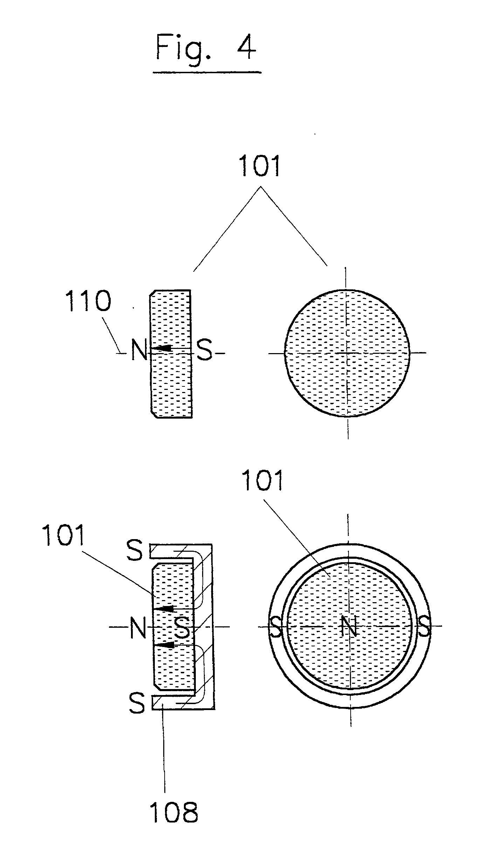

In beiden Fällen werden Magnete als Bremsmagnete 101 eingesetzt, die in Fig. 4 in zwei Versionen in Front- und Seitenansicht dargestellt sind. Dabei ist ersichtlich, daß in beiden Fällen der eigentliche Bremsmagnet 101 in Durchgangsrichtung durch die Dicke der Scheibe magnetisiert ist, so daß die eine Stirnfläche den Nordpol und die andere den Südpol darstellt. Bei der in Fig. 4 unteren Ausführungsform ist dabei der Südpol sowie der Umfang des scheibenförmigen Magnetes durch einen topfförmigen einstückigen Polschuh 108 aus Weicheisen abgedeckt, wodurch in der Funktion der Südpol dieses Magneten verlagert wird, indem die Feldlinien außerhalb des Südpoles durch den Polschuh 108 hindurch zur offenen Frontseite des topfförmigen Polschuhes geführt werden.

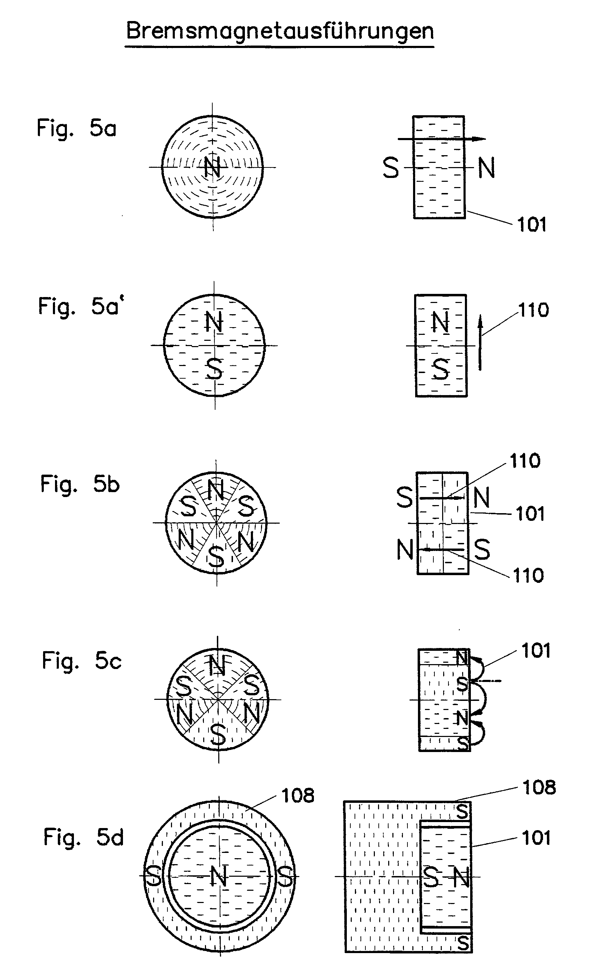

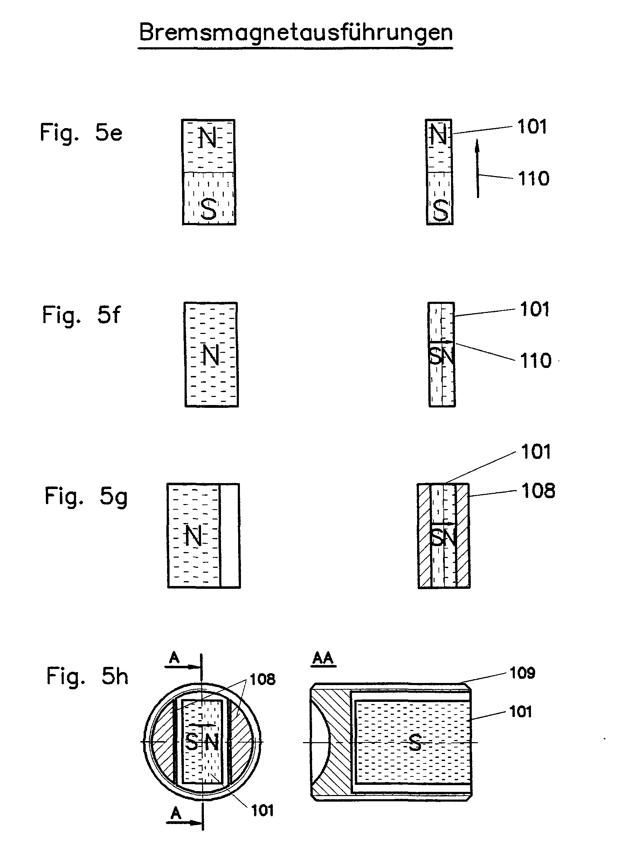

Fig. 5 zeigen unterschiedliche Magnetisierungsarten von scheibenförmigen Magneten. Dabei entspricht Fig. 5 a der Lösung gem. Fig. 4, wobei jeweils die gesamte Stimfläche der Scheibe einem Pol, also Nordpol oder Südpol, entspricht. Die Axialrichtung der Scheibe ist somit die Magnetisierungsachse. Im Gegensatz dazu ist in Fig. 5a' die Magnetisierungsachse parallel zur Scheibenebene.

Bei einer Lösung gem. Fig. 5 b ist die Magnetisierungsachse 110 zwar ebenfalls parallel zur dicken Abmessung der Scheibe, jedoch ist der Scheibenumfang in mehrere, in diesem Fall sechs, Sektoren unterteilt, und jeder Sektor separat in Durchgangrichtung magnetisiert, jedoch mit in Umfangsrichtung abwechselnder Polung, so daß auf einer Stirnseite über den Umfang verteilt, sechs verschiedene, einander abwechselnde Pole vorliegen, gleiches auf der gegenüberliegenden Stirnseite (axial sektorenförmig durchmagnetisiert).

Fig. 5 c zeigt eine ähnliche sektorenförmig unterschiedliche Magnetisierung in Umfangsrichtung, jedoch ist hierbei die Scheibe des Magneten in Durchgangsrichtung nicht durchmagnetisiert, sondern nur eine der Stirnflächen insgesamt magnetisiert, so daß diese magnetisierte Stimfläche als eine in Umfangsrichtung betrachtet als Aneinanderreihung von unterschiedlich geformten Stabmagneten betrachtet werden kann (sektorenförmig laterale Magnetisierung auf einer Fläche).

Fig. 5d zeigt den Magneten der Fig. 5a, umgeben von einem topfförmigen Polschuh, wie er auch bereits in Fig. 4, untere Darstellung, dargestellt und beschrieben ist.

Die Figuren 5e-5h zeigen dagegen Stabmagnete. Bei der Lösung in Fig. 5e ist die Längsrichtung des Stabes die Magnetisierungsrichtung, also mit dem Nordpol am einen schmalseitigen Ende und dem Südpol am gegenüberliegenden schmalseitigen Ende.

In Fig. 5f verläuft dagegen die Magnetisierungsrichtung 110 quer zur Längserstreckung des Stabmagneten, also mit dem Nordpol auf der einen Breitseite und dem Südpol auf der anderen Breitseite.

Gleiches gilt auch für den Magneten gemäß Fig. 5g, der zusätzlich von einem U-förmigen Polschuh 108, vorzugsweise aus Weicheisen, umgeben ist, dessen frei endende Schenkel parallel zu den Südpol- und Nordpolflächen angeordnet sind.

Eine solche Lösung zeigt prinzipiell auch die Fig. 5h, bei der jedoch die Außenkonturen der Polschuhe 108 in der Aufsicht betrachtet so konvex gekrümmt sind, daß ein insgesamt etwa runder Außenumfang entsteht.

Dadurch können Magnet 101 und die beiden Polschuhe 108 gemeinsam in eine zylindrische stirnseitige Bohrung eines Magnethalters 109 eingesetzt werden, der an seinem ebenfalls zylindrischen Außenumfang ein Außengewinde zum Einschrauben in eine Befestigungsöffnung aufweist.

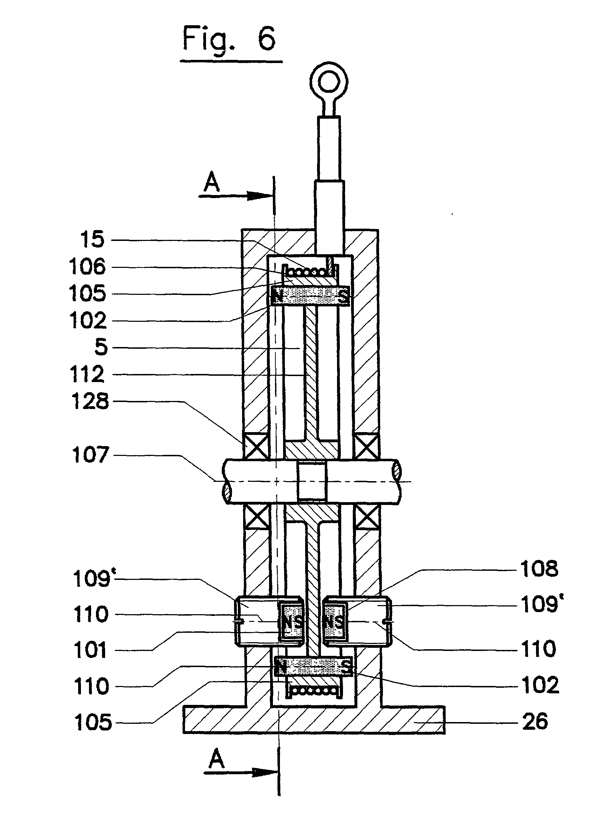

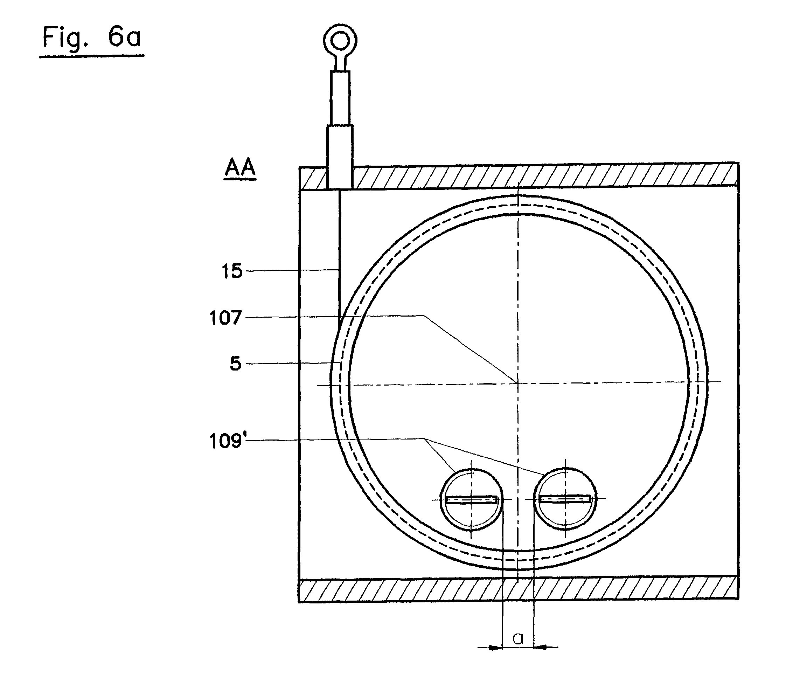

Fig. 6 zeigt wiederum eine Schnittdarstellung entlang der Rotationsachse 107.

Auch hier ist die Seiltrommel 5 mittels ihrer Achse und Lagern 128 in den Seitenwänden eines Profiles 26 gelagert, welches als Gehäuse dient.

Im Gegensatz zu den Lösungen von Fig. 1 oder Fig. 2 ist die Speichenplatte 112 der Seiltrommel 5 in axialer Richtung mittig zu dem Wickelzylinder 105 angeordnet, dessen Außenfläche, die Wickelfläche 106, von einem Meßseil 15 bewickelt, dargestellt ist. In der unteren Bildhälfte der Fig. 6 sind an der Innenfläche des Wickelzylinders 105 bzgl. der Speichenplatte 112 gegenüberliegend zwei stabförmige Haltemagnete 102 angeordnet, die mit entgegengesetzten Polen gegeneinander, also gegen die Trommelplatte 112, weisen. Die Haltemagnete 102 stehen dabei vorzugsweise in Längsrichtung etwas über die Außenflächen der Seiltrommel 5 vor.

Um die Seiltrommel 5 nicht unwuchtig werden zu lassen, ist das gleiche Paar von Haltemagneten 102 auf der bzgl. der Rotationsachse 107 der Seiltrommel 5 gegenüberliegenden Seite ebenfalls auf der radial innenliegenden Fläche des Seilzylinders 105 angeordnet. Die Befestigung erfolgt dabei vorzugsweise durch Kleben.

Auch eine Durchbohrung der Trommelplatte 112 in Längsrichtung und Hindurchstecken eines einzigen anstelle der beiden fluchtenden Stabmagnete als Haltemagnet 102 ist denkbar.

Fig. 6 weist jedoch zusätzlich in der unteren Bildhälfte auch ein Paar von Bremsmagneten 101 auf. Diese sind jedoch an den Seitenwänden des Profiles 26 angeordnet und reichen - radial innerhalb des Wickelzylinders 105 - bis nahe an die Trommelplatte 112 der Seiltrommel 5 heran. Zur Einstellbarkeit des Luftspaltes dazwischen sind die beiden Bremsmagnete 101 - die wiederum mit ihrer Magnetisierungsrichtung parallel zur Rotationsachse 107 angeordnet und mit entgegengesetzten Polen aufeinander zu ausgerichtet sind - jeweils in Vertiefungen in den aufeinander zu gerichteten Stirnseiten von Magnethaltern 109 angeordnet, welche ein Außengewinde aufweisen, mit dessen Hilfe sie in einer entsprechenden, axial verlaufenden Gewindebohrung durch die Wandung des Profiles hindurch verschraubbar und damit hinsichtlich der Größe des Luftspaltes einstellbar sind.

Die beiden Bremsmagnete 101 befinden sich dabei zur Steigerung der Magnetkraft jeweils in einem topfförmigen Polschuh 108, dessen offene Seite hierbei jeweils ebenfalls in Richtung auf die Trommelplatte 112 und damit auf den gegenüberliegenden Bremsmagneten 101 zugerichtet sind.

Die Seitenansicht dieser Lösung in Fig. 6a zeigt weiterhin die Möglichkeit, entlang des Umfanges verteilt nicht nur einen, sondern mehrere solche Bremsmagnete 101 in Magnethaltern 109 in den Wänden des Profiles 26 anzuordnen, wobei ein Mindestabstand a dazwischen eingehalten werden muß, um eine negative gegenseitige Beeinflussung der Bremsmagnete 110 zu verhindern.

Fig. 6a zeigt ferner, daß nicht unbedingt eine über den Umfang gleichmäßige Verteilung der Bremsmagnete 101 bzw. Magnethalter 109 vorhanden werden muß.

Die Haltemagnete 102 sind dabei aus Übersichtlichkeitsgründen nicht eingezeichnet.

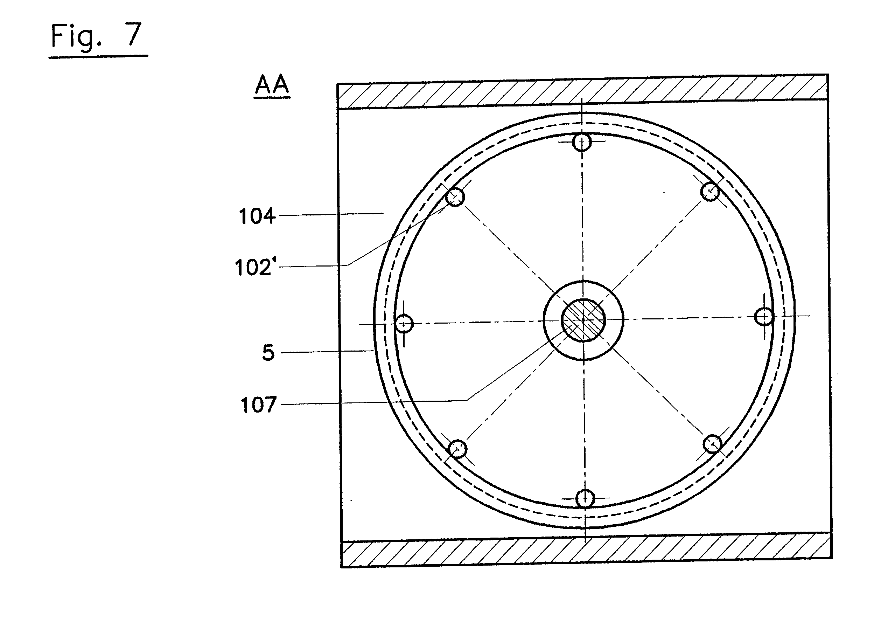

Fig. 7 zeigt eine andere Frontansicht auf die Seiltrommel 5 gem. der Linie A-A der Fig. 6.

Durch entsprechende Schnittführung sind dabei in Fig. 7 ausschließlich die Haltemagnete 102 an der Seiltrommel 5 zu erkennen, von denen acht Stück in einem Abstand von jeweils 45 Grad angeordnet sind. Diese Darstellung soll verdeutlichen, daß bei der Wahl ausreichend starker Haftmagnete 102 diese Magnete als Kombimagnete 102' dienen können, sofern deren Luftspalt zum benachbarten Gehäuse, insbesondere der Gehäuseseitenwand des Profiles 26, richtig dimensioniert ist. In diesem Fall kann vollständig auf zusätzliche separate Bremsmagnete verzichtet werden.

Unabhängig davon funktionieren alle dargestellten Lösungen immer nur unter der Grundvoraussetzung, daß
- bei den Haltemagneten das durch die Magnete beaufschlagte Meßseil 15 aus einem magnetisierbaren Material bestehen muß, bzw.
- bei den Bremsmagneten das beeinflußte Bauteil (also bei Anordnung der Bremsmagnete an der Seiltrommel das Gehäuse oder bei Anordnung der Bremsmagneten am Gehäuse die Seiltrommel (wenigstens im beeinflußten Bereich) aus elektrisch leitfähigem Material bestehen muß oder beschichtet sein muß.

Bei Verwendung von Kombimagneten gelten diese Bedingungen kumulativ.

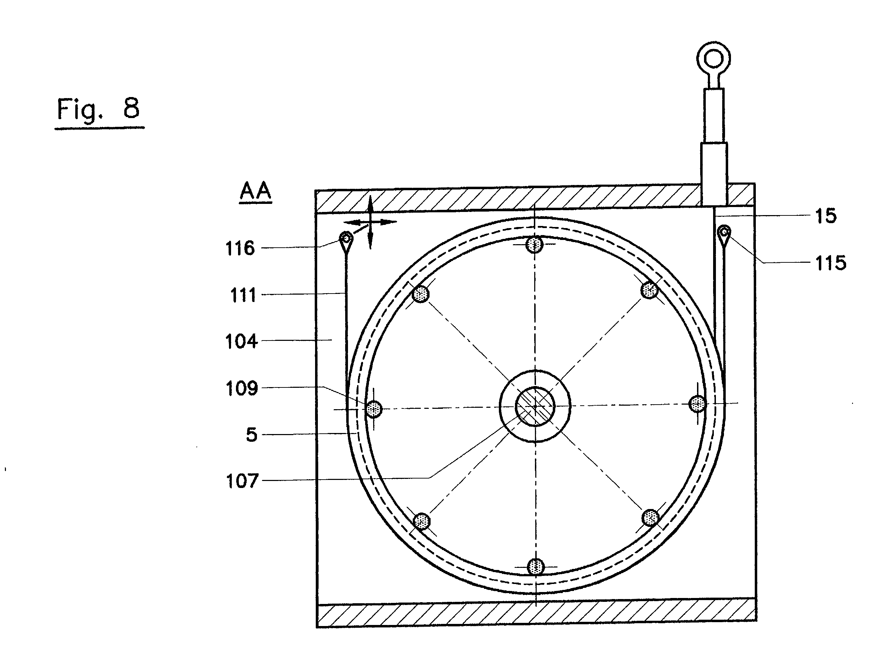

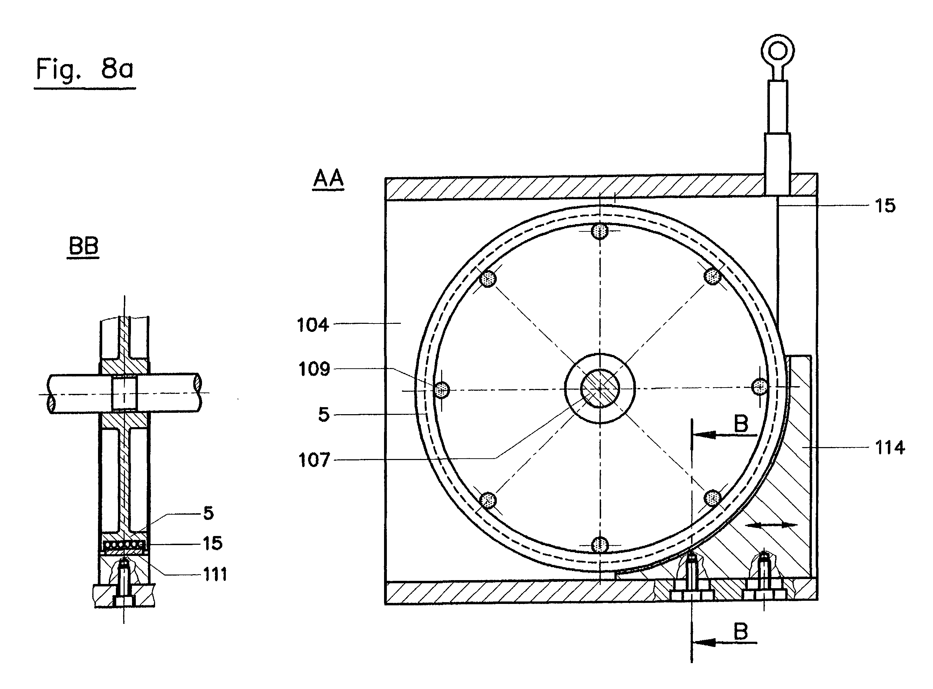

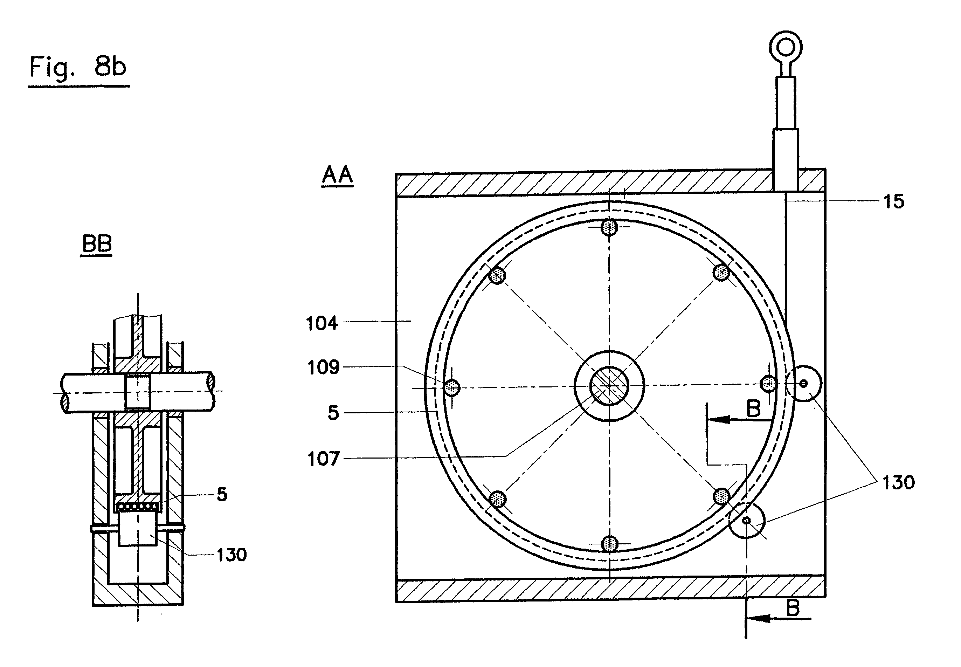

Fig. 8 zeigt eine Lösung, die sich gegenüber Fig. 7 durch ein zusätzliches Gleitband 111 unterscheidet. Dieses (endliche) "Gleitband" besteht in der Regel aus Filz oder einem anderen gut schwingungsdämpfenden Textilmaterial und ist um den vom Seileinlauf abgewandten Teil, insbesondere einen Bereich von etwa 180°, der Seiltrommel 5 herumgelegt. Zu diesem Zweck ist das eine Ende des Gleitbandes 111 an einem Festpunkt 115 nahe des Seileinlaufs am Gehäuse befestigt, während das andere Ende um einen Verstellpunkt 116 auf der gegenüberliegenden Seite der Rotationsachse 107 der Seiltrommel 5 am Gehäuse festgelegt ist. Der Verstellpunkt 116 kann dabei sowohl tangential als auch radial bzgl. der Achse 107 der Seiltrommel 5 verlagert werden, insbesondere in zwei aufeinanderstehenden senkrecht stehenden Richtungen jeweils quer zur Rotationsachse 107.

Dadurch kann der im Ausgangszustand lose oder völlig fehlende Kontakt zwischen dem Gleitband 111 und der Außenseite der Seilbewicklung zur Intensivierung oder Lockerung des Kontaktes verstellt werden mit dem Ziel, ein "Aufsteigen", also radiales Abheben, des Meßseiles zu verhindern, falls hierfür die Kombimagnete 102' bzw. die Haltemagnete 102 sich als nicht ausreichend erweisen sollten. Das Aufsteigen kann bereits dadurch verhindert werden, daß im wesentlichen kein Kontakt zwischen dem Gleitband 111 und der Außenseite der Meßseilwicklung vorhanden ist, da dieser Kontakt erst bei dem unerwünschten Aufsteigen des Meßseiles in radialer Richtung nach außen zustande kommt. Infolgedessen muß der evtl. vorhandene Abstand zwischen Außenfläche der Seilbewicklung und Innenfläche des Haltebandes so gering wie möglich, im Idealfall annähernd Null, eingestellt werden.

Fig. 8a zeigt eine Lösung, bei der das Gleitband 111 nicht lose um die seilbewickelte Trommel herumgelegt ist, sondern sich als Belag auf einem Gleitschuh 114 befindet, dessen der Seiltrommel 5 zugewandte Kontur der Außenkontur der bewickelten Seiltrommel 5 entspricht. Der Gleitschuh 114 erstreckt sich um etwa 90° um die äußere Mantelfläche der Seiltrommel 5 herum, und zwar in Aufwickelrichtung in dem an den Auflaufpunkt der Seiltrommel anschließenden Segment. Der Gleitschuh 114 ist am Gehäuse 104 befestigt, insbesondere verschraubt und so positioniert, daß sein aus Gleitband 111 bestehender Belag den gewünschten Kontakt zur Außenfläche der Seilbewicklung der Seiltrommel 5 aufweist, wie die Schnittdarstellung B-B zeigt.

Die Lösung gemäß Fig. 8b unterscheidet sich von derjenigen gemäß Fig. 8a dadurch, daß anstelle des Gleitschuhs 114 über den ersten Quadranten des aufwickelnden Meßseiles 15 auf der Seiltrommel 5 zwei oder auch mehr Gleitrollen 130, die in Gehäuse 104 gelagert sind, von der Außenseite des aufgewickelten Meßseiles 15 aus anliegen und ein Abheben des Meßseiles von dem Außenumfang der Seiltrommel 5 verhindern.

### BEZUGSZEICHENLISTE

- 5: Seiltrommel
- 15: Meßseil
- 26: Profil
- 101: Bremsmagnet
- 102: Haltemagnet
- 102': Kombimagnete
- 103: Einwirkbereich
- 104: Gehäuse
- 105: Wickelzylinder
- 106: Wickelfläche
- 107: Achse
- 108: Polschuh
- 109: Verstellschraube und Magnethalter
- 110: Magnetisierungsachse
- 111: Gleitband
- 112: Trommelplatte
- 113: Kontaktschutz
- 114: Gleitschuh
- 115: Festpunkt
- 116: Verstellpunkt
- 128: Lager
- 130: Gleitrolle

## Patentansprüche

1. Meßseil-Wegsensor mit
- einer Seiltrommel (5) zum Aufwickeln des Meßseiles (15) auf der äußeren Wickelfläche (106) des Wickelzylinders (105) der Seiltrommel (5), und
- einem Gehäuse, in welchem die Seiltrommel (5) gelagert ist,
**dadurch gekennzeichnet, daß**
- wenigstens ein Bremsmagnet (101) an einem nicht mit der Seiltrommel (5) mitdrehenden Punkt so angeordnet ist, daß er berührungslos magnetisch auf die Seiltrommel (5) an einem an der Seiltrommel (5) exzentrischen Einwirkbereich (103') gegen die Drehrichtung bremsend einwirkt, und
- die Seiltrommel (5) wenigstens im Einwirkbereich (103') aus elektrisch leitfähigem Material besteht.

2. Meßseil- und Wegsensor nach Anspruch 1,
**dadurch gekennzeichnet, daß**
der Bremsmagnet (101) am Gehäuse (104) angeordnet ist.

3. Meßseil-Wegsensor mit
- einer Seiltrommel (5) zum Aufwickeln des Meßseiles (15) auf der äußeren Wickelfläche (106) des Wickelzylinders (105) der Seiltrommel (5), und
- einem Gehäuse, in welchem die Seiltrommel (5) gelagert ist,
**dadurch gekennzeichnet, daß**
- wenigstens ein Bremsmagnet (101) an einem exzentrisch liegenden Bereich der Seiltrommel (5) so angeordnet ist, daß er berührungslos magnetisch auf das Gehäuse, die Seiltrommel in Drehrichtung bremsend, einwirkt, und
- das Gehäuse (4) wenigstens im Einwirkbereich (103') aus elektrisch leitfähigem Material besteht.

4. Meßseil- Wegsensor nach einem der vorhergehenden Ansprüche,
**dadurch gekennzeichnet, daß**
- an der Seiltrommel (5) radial innerhalb der Wickelfläche (106) des Wickelzylinders (105) wenigstens ein Haltemagnet (102) angeordnet ist zum Halten des Meßseiles (15) radial nach innen an der Wickelfläche (106), und
- das Meßseil (15) aus magnetisierbarem Material besteht.

5. Meßseil-Wegsensor nach einem der vorhergehenden Ansprüche,
**dadurch gekennzeichnet, daß**
um wenigstens einen Teil des Außenumfanges der ganz oder teilweise mit Meßseil (15) beweglichen Wickelfläche (106) ein Gleitband (111), insbesondere ein Band aus Textilmaterial, insbesondere ein Gleitband oder ein Band aus anderem gleitfähigen, nicht abrasiven Material, in geringem Abstand und/oder an dem Außenumfang der Bewicklung mit dem Meßseil schleifend herumgeführt ist und der Abstand, bzw. Anpreßdruck des Bandes gegen die Bewicklung mit Meßseil (15) einstellbar ist.

6. Meßseil-Wegsensor nach Anspruch 5,
**dadurch gekennzeichnet, daß**
das Gleitband (111) sich als Belag auf einem Gleitschuh (114) befindet, dessen der Seiltrommel (5) zugewandte Kontur der Außenkontur der bewickelten Seiltrommel entspricht.

7. Meßseil-Wegsensor nach einem der vorhergehenden Ansprüche,
**dadurch gekennzeichnet, daß**
über den ersten Quadranten der Seiltrommel (5) verteilt wenigstens zwei im Gehäuse (104) gelagerte Gleitrollen (130) gegen die Außenseite des aufgewickelten Meßseiles (15) anliegen.

8. Meßseil-Wegsensor nach einem der Ansprüche 3 bis 7,
**dadurch gekennzeichnet, daß**
der an der Seiltrommel (5) angeordnete mindestens zwei Bremsmagnete (101) und/oder Haltemagnete (102) jeweils gleichmäßig über den Umfang der Seiltrommel verteilt, insbesondere paarweise zur Vermeidung von Unwucht an der Seiltrommel angeordnet sind, und insbesondere die Bremsmagnete (101) mit möglichst großem Abstand zur Rotationsachse (107) der Seiltrommel (5), insbesondere nahe am Außenumfang der Seiltrommel (5), angeordnet sind, und insbesondere die Bremsmagnete (101) und/oder die Haltemagnete (102) Permanentmagnete sind.

9. Meßseil-Wegsensor nach einem der Ansprüche 4 bis 8,
**dadurch gekennzeichnet, daß**
die Haltemagnete mit ihrer Magnetisierungsachse (110) parallel zur Rotationsachse (107) der Seiltrommel (5) angeordnet sind, und insbesondere die Bremsmagnete (101) mit ihrer Magnetisierungsachse (110) parallel zur Rotationsachse (107) der Seiltrommel (5) angeordnet und entgegengesetzt gepolt sind.

10. Meßseil-Wegsensor nach einem der vorhergehenden Ansprüche,
**dadurch gekennzeichnet, daß**
die Bremsmagnete (101) mit Polschuh-Stücken radial innerhalb sowie außerhalb der Magnetisierungsachse, insbesondere mit einem topfförmigen Polschuh-Stück (108), welches nur zu dem beeinflussenden Bauteil (z. B. Trommelplatte (112) der Seiltrommel (5)) hin offen ist, ausgestattet ist.

11. Meßseil-Wegsensor nach einem der vorhergehenden Ansprüche,
**dadurch gekennzeichnet, daß**
die Bremsmagnete (101) und/oder die Haltemagnete (102) in einem Magnethalter (109) aufgenommen sind, dessen Position in axialer Richtung der Seiltrommel (5) gegenüber dem zu beeinflussenden Bauteil einstellbar, insbesondere stufenlos einstellbar, ist, und insbesondere der Magnethalter (109) ein Gewindebolzen ist, an dessen einer Stirnseite der Bremsmagnet (101) und/oder Haltemagnet (102) gegen das zu beeinflussende Bauteil hin gerichtet angeordnet ist.

12. Meßseil-Wegsensor nach einem der Ansprüche 3 bis 11,
**dadurch gekennzeichnet, daß**
als Bremsmagnete (101) beidseits der Seiltrommel (5) gegenüberliegend und in Längsrichtung der Seiltrommel (5) mit entgegengesetzten Polen als gegeneinanderweisende Magnete in Längsrichtung der Seiltrommel (5) fluchtend angeordnet sind.

13. Meßseil-Wegsensor nach einem der vorhergehenden Ansprüche,
**dadurch gekennzeichnet, daß**
als Bremsmagnete (101) scheibenförmige Magnete verwendet werden, deren Magnetisierungsachse (110) der Richtung der Dicke des scheibenförmigen Magneten entspricht.

14. Meßseil-Wegsensor nach einem der vorhergehenden Ansprüche,
**dadurch gekennzeichnet, daß**
als Bremsmagnete (101) scheibenförmige Magnete verwendet werden, die in Sektoren unterteilt sind, wobei die einzelnen Sektoren als Einzelmagnete wirken, deren Magnetisierungsachsen (10) jeweils der Richtung der Dicke des scheibenförmigen Magneten entsprechen, wobei die Polung der einzelnen Sektoren entlang des Umfanges wechselt, und insbesondere als Bremsmagnete (101) scheibenförmige Magnete verwendet werden, bei denen nur eine der Hauptflächen magnetisiert ist durch sektorenförmig abwechselnde Magnetisierung in Umfangsrichtung.

15. Meßseil-Wegsensor nach einem der Ansprüche 4 bis 14,
**dadurch gekennzeichnet, daß**
der bzw. die. Bremsmagnete (101) und der bzw. die Haltemagnete (102) gemäß einem der vorhergehenden Ansprüche in jeweils einem Kombimagnet funktionsvereinigt sind.

## Claims

1. Measuring cable travel sensor, with
- a cable drum (5) for winding-on the measuring cable (15) onto the external winding surface (106) of the winding cylinder (105) of the cable drum (5), and
- a housing (104) in which the cable drum (5) is supported by way of bearings, **characterized in that**
- in a non-rotating point with respect to the measuring cable drum (5), there is arranged at least a braking magnet (101) thus that it act magnetically, in a contact-less mode, against the rotation direction by braking the cable drum (5) in a region of action (103) eccentrical with respect to the cable drum (5), and
- at least in the region in which the magnet acts (103), the cable drum (5) is made of an electrically conductive material.

2. Measuring cable travel sensor according to claim 1, **characterized in that**, the braking magnet (101) is arranged on the housing (104).

3. Measuring cable travel sensor, with
- a cable drum (5) for winding-on the measuring cable (15) onto the external winding surface (106) of the winding cylinder (105) of the cable drum (5), and
- a housing (104) in which the cable drum (5) is supported by way of bearings, **characterized in that**
- in a region eccentrical with respect to the measuring cable drum (5), there is arranged at least a braking magnet (101) thus that it act magnetically, in a contact-less mode, upon the housing (104), by braking the cable drum (5) in the rotation direction, and
- at least in the region in which the magnet acts (103), the cable drum (5) is made of an electrically conductive material.

4. Measuring cable travel sensor according to any one of the preceding claims, **characterized in that**,
- on the cable drum, radially within the winding surface (106) of the winding cylinder (105), there is arranged at least a holding magnet (102) to hold the measuring cable (15) radially, inwardly onto the winding surface (106), and
- the measuring cable (15) is made of a magnetisable material.

5. Measuring cable travel sensor according to any one of the preceding claims, **characterized in that**, at least on a part of the external periphery of the widing surface (106), moving partially or entirely with the measuring cable (15), there is arranged at a small spacing and/or slidingly with respect to the measuring cable onto the winding external periphery, a sliding belt (111), in particular a textile material comprising one, in particular a sliding band or one made of another sliding non-abrasive material, the spacing and the belt pressing force on the measuring cable (15) winding being adjustable, respectively.

6. Measuring cable travel sensor according to claim 5, **characterized in that**, the sliding belt (111) is arranged as a lining on the slide shoe (114), and whose external contour contiguous to the cable drum (5) corresponds to the external contour of the wound cable drum.

7. Measuring cable travel sensor according to any one of the preceding claims, **characterized in that**, on the external side of the wound measuring cable (15), arranged in the first quadrant of the cable drum (5), there are at least two sliding rollers (130) supported by way of bearings in the housing (104).

8. Measuring cable travel sensor according to any one of the claims from 3 to 7, **characterized in that**, at least a pair of braking magnets (101) and/or holding magnets (102) arranged on the cable drum (5) are uniformly distributed over the periphery of the cable drum, in particular are arranged in pairs on the cable drum for avoiding the unbalance of the cable drum, and in particular the braking magnets (101) are disposed at the largest possible spacing relative to the axis of rotation (107) of the cable drum (5), in particular in the proximity of the external periphery of the cable drum (5), and in particular the braking magnets (101) and/or the holding magnets (102) are permanent magnets.

9. Measuring cable travel sensor according to any one of the claims from 4 to 8, **characterized in that**, the holding magnets have their axis of magnetisation (110) arranged in parallel to the axis of rotation (107) of the cable drum (5), and in particular the braking magnets (101) are arranged with their axis of magnetisation (110) in parallel to the axis of rotation (107) of the cable drum (5), and being of opposite polarities.

10. Measuring cable travel sensor according to any one of the preceding claims, **characterized in that**, radially inside and outside the axis of magnetisation, the braking magnet (101) has pole pieces, in particular cup-shaped pole pieces (108), open only towards the element they are magnetically acting upon (for example the drum spoke disk (112) of the cable drum (5).

11. Measuring cable travel sensor according to any one of the preceding claims, **characterized in that**, the braking magnets (101) and/or the holding magnets (102) are accommodated into a magnet holder (109) whose position with respect to element they are magnetically acting upon is adjustable, in particular steplessly adjustable in the axial direction of the cable drum (5), and in particular the magnet holder (109) is a screwthreaded member on whose front part, orientated towards the constructive element it is magnetically acting upon, there is arranged the braking magnet and/or the holding magnet (102).

12. Measuring cable travel sensor accordind to any one of the claims from 3 to 11, **characterized in that**, the mutually facing magnets are arranged in alignment in the longitudinal direction of the cable drum (5) as braking magnets (101) in opposite relationship on both sides of the cable drum (5) facing towards each other with opposite poles in the longitudinal direction.

13. Measuring cable travel sensor according to any one of the preceding claims, **characterized in that**, as braking magnets (101) there are employed disk-shaped magnets whose axis of magnetisation (110) corresponds to the magnet thickness.

14. Measuring cable travel sensor according to any one of the preceding claims, **characterized in that**, as braking magnets (101) there are employed disk-shaped magnets subdivided into sectors, whereupon the individual sectors are operative as individual magnets, whose magnetisation axes (110) respectively correspond to the thickness of the disk-shaped magnet, whereupon the polarity of the individual sectors is alternating alongside the periphery, and in particular as braking magnets (101) there are employed disk-shaped magnets having only one of their faces magnetised by magnetisation alternating in a sector configuration in a peripheral direction.

15. Measuring cable travel sensor according to any one of the claims from 4 to 14, **characterized in that**, the magnet and the braking magnets (101) respectively, and the magnet and the holding magnets (102) respectively, are functionally combined in a respective combination magnet (102') according to any one of the preceding claims.

## Revendications

1. Senseur de déplacement avec câble de mesure, avec
- un tambour pour le câble (5) pour l'enroulement du câble de mesure (15) sur la surface d'enroulement (106), extérieure du cylindre enrouleur (105) du tambour pour le câble (5) et
- une carcasse dans laquelle est monté dans les paliers le tambour pour le câble (5), **caractérisé en ce que**,
- dans un point qui ne tourne pas avec le tambour pour le câble de mesure (5) est disposé au moins un aimant de freinage (101), de sorte que celui-ci actionne de manière magnétique sans toucher contre le sens de rotation, par freinage sur le tambour pour le câble (5), dans une zone d'action (103'), excentrique du tambour pour le câble (5) et
- au moins dans la zone d'action (103'), le tambour pour le câble (5) est d'une matière conductrice d'électricité.

2. Câble de mesure et senseur de déplacement selon la revendication 1, **caractérisé en ce que**, l'aimant de freinage (101) est disposé sur la carcasse (104).

3. Senseur de déplacement avec câble de mesure, avec
- un tambour pour le câble (5) pour l'enroulement du câble de mesure (15) sur la surface d'enroulement (106), extérieure du cylindre d'enroulement (105) du tambour pour le câble (5) et
- une carcasse dans laquelle est monté dans les paliers le tambour pour le câble (5), **caractérisé en ce que**,
- dans une zone excentrique du tambour pour le câble de mesure (5) est disposé au moins un aimant de freinage (101), de sorte que celui-ci actionne de manière magnétique sans toucher sur la carcasse, freinant le tambour pour le câble (5) dans le sens de rotation et
- au moins dans la zone d'action (103'), la carcasse (104) est d'une matière conductrice d'électricité.

4. Senseur de déplacement avec câble de mesure selon l'une des revendications antérieures, **caractérisé en ce que**,
- sur le tambour pour le câble dans la direction radiale à l'intérieur de la surface d'enroulement (106) du cylindre enrouleur (105) est disposé au moins un aimant de blocage (102) pour le maintien du câble de mesure (15) en direction radiale vers l'intérieur, sur la surface d'enroulement (106) et
- le câble de mesure (15) est d'une matière magnétisable.

5. Senseur de déplacement avec câble de mesure selon l'une des revendications antérieures, **caractérisé en ce que**, sur au moins une portion de la circonférence extérieure de la surface d'enroulement (106) qui entièrement ou partiellement est enroulé avec le câble de mesure (15), à petite distance et/ou sur la circonférence extérieure de l'enroulement avec le câble de mesure est conduite par glissage une bande de glissement 111, spécialement une bande glissante en matière textile, spécialement une bande de glissement ou une bande d'une autre matière glissante, une matière non-abrasive et la distance respectivement la force de pressage de la bande sur l'enroulement avec le câble de mesure (15) est réglable.

6. Senseur de déplacement avec câble de mesure selon la revendication 5, **caractérisé en ce que**, la bande de glissement (111) se trouve comme une enveloppe sur un sabot (114) dont le contour voisin au tambour pour le câble (5) correspond au contour extérieur du tambour pour le câble, enroulé.

7. Senseur de déplacement avec câble de mesure selon l'une des revendications antérieures, **caractérisé en ce que**, sur la partie extérieure du câble de mesure (15) enroulé, répartis dans le premier cadran du tambour pour le câble (5), s'assoit au moins deux galets de glissement (130) montés en paliers dans la carcasse (104).

8. Senseur de déplacement avec câble de mesure selon l'une des revendications 3 à 7, **caractérisé en ce que**, au moins deux aimants de freinage (101) et/ou de blocage (102), disposés sur le tambour pour le câble (5) sont répartis uniformément sur la circonférence du tambour pour le câble, spécialement sont disposés par paires sur le tambour pour le câble pour l'évitage de l' excentricité et spécialement les aimants de freinage (101) sont disposés à une distance la plus grande possible par rapport à l'axe de rotation (107) du tambour pour le câble (5), spécialement près de la circonférence extérieure du tambour pour le câble (5) et spécialement les aimants de freinage (101) et/ou les aimants de blocage (102) sont des aimants permanents.

9. Senseur de déplacement avec câble de mesure selon l'une des revendications 4 à 8, **caractérisé en ce que**, les aimants de blocage sont disposés avec leur axe de magnétisation (110) parallèlement par rapport à l'axe de rotation (107) du tambour pour le câble (5) et spécialement les aimants de freinage (101) sont disposés avec leur axe de magnétisation (110) parallèlement par rapport à l'axe de rotation (107) du tambour pour le câble (5) et avec polarité opposée.

10. Senseur de déplacement avec câble de mesure selon l'une des revendications antérieures, **caractérisé en ce que**, dans la direction radiale à l'intérieur aussi bien qu'à l'extérieur de l'axe de magnétisation, l'aimant de freinage (101) est prévu avec pièces polaires, spécialement avec une pièce polaire (108) en forme de pot qui est ouverte seulement vers l'élément constructif sur lequel celui-ci actionne par exemple la plaque 112 du tambour pour le câble (5).

11. Senseur de déplacement avec câble de mesure selon l'une des revendications antérieures, **caractérisé en ce que**, les aimants de freinage (101) et/ou les aimants de blocage (102) sont introduits dans un support d'aimant (109) dont la position par rapport à l'élément constructif sur lequel celui-ci actionne est réglable, spécialement réglable sans degrés dans la direction axiale du tambour pour le câble (5) et spécialement le support pour le câble (109) est un boulon fileté sur laquelle partie frontale, orientée vers l'élément constructif sur lequel celui-ci actionne, est disposé l'aimant de freinage (101) et/ou l'aimant de blocage (102).

12. Senseur de déplacement avec câble de mesure selon l'une des revendications 3 à 11, **caractérisé en ce que**, les aimants de freinage (101) sont disposés dans la direction longitudinale du tambour pour le câble (5) face à face de toutes les deux parties du tambour pour le câble 5 et avec les pôles opposés, comme aimants orientés l'un vers l'autre dans la direction longitudinale du tambour pour le câble (5).

13. Senseur de déplacement avec câble de mesure selon l'une des revendications antérieures, **caractérisé en ce que**, comme aimants de freinage (101) on utilise des aimants en forme de disque dont l'axe de magnétisation (110) correspond à la direction de l'épaisseur de l'aimant en forme de disque.

14. Senseur de déplacement avec câble de mesure selon l'une des revendications antérieures, **caractérisé en ce que**, comme aimants de freinage (101) on utilise aimants en forme de disque, subdivisés par secteurs, où les secteurs singuliers actionnent comme un seul aimant dont l'axe de magnétisation (110) correspond à la direction de l'épaisseur de l'aimant en forme de disque, où la polarité des secteurs singuliers alterne au long de la circonférence et spécialement comme aimant de freinage (101) s'utilise aimants en forme de disque où est magnétisée seulement l'une d'entre les faces principales par magnétisation sur secteurs, alternante dans la direction de la circonférence.

15. Senseur de déplacement avec câble de mesure selon l'une des revendications 4 à 14, **caractérisé en ce que**, l'aimant respectivement l'aimant de freinage (101) et l'aimant respectivement respectivement les aimants de blocage (102) ont une fonction combinée d'aimant combiné selon l'une des revendications antérieures.
